# EUROPEAN PATENT APPLICATION

(11) **EP 2 325 531 A1**
(43) Date of publication of application: **25.05.2011**
(21) Application number: 10251979.0
(22) Date of filing: 22.11.2010
(51) Int. Cl.: F16J 15/32

(54) **Porous metal gland seal**

(30) Priority: 23.11.2009 US 623852
(71) Applicant: Hamilton Sundstrand Corporation, Windsor Locks, CT 06096-1010 (US)
(72) Inventor: Short, Keith E., Rockford Illinois 61111 (US); Blewett, Michael R., Stillman Valley Illinois 61084 (US)
(74) Representative: Tomlinson, Kerry John

(57) **Abstract**

A seal body (30) for use to seal on a rotating shaft (26) has a generally cylindrical central bore for receiving a shaft, and is formed of an open-celled material. In addition, a shaft and seal combination (20) and a gear box are disclosed and claimed.

## Description

### BACKGROUND OF THE INVENTION

This application relates to the use of an open celled metal material to provide a shaft seal.

Shaft seals are typically utilized to isolate a first space from an outer space. As one example, a gear box, such as may be associated with an aircraft engine, is provided with lubricant. It would be undesirable to allow this lubricant to escape outwardly of the gear box. Thus, seals are provided on a shaft which is driven by the gear box.

One known type of seal is a labyrinth seal. A source of pressurized air is delivered to the labyrinth seal, and moves through a torturous path provided by the labyrinth to bias the lubricant within the gear box. Labyrinth seals are relatively effective, however, they are complex to use and to manufacture.

Metal foams are known, and have been utilized for various purposes. However, metal foams have not been utilized to provide a seal.

### SUMMARY OF THE INVENTION

A seal body for use to seal on a rotating shaft has a generally cylindrical central bore for receiving a shaft, and is formed of an open-celled material. In addition, a shaft and seal combination and a gear box are disclosed and claimed.

These and other features of the present invention can be best understood from the following specification and drawings, the following of which is a brief description.

### BRIEF DESCRIPTION OF THE DRAWINGS

Figure 1 shows a prior art seal and gear box.
Figure 2A shows an inventive seal and gear box.
Figure 2B shows a feature of the material utilized to form the inventive seal.

### DETAILED DESCRIPTION OF THE PREFERRED EMBODIMENT

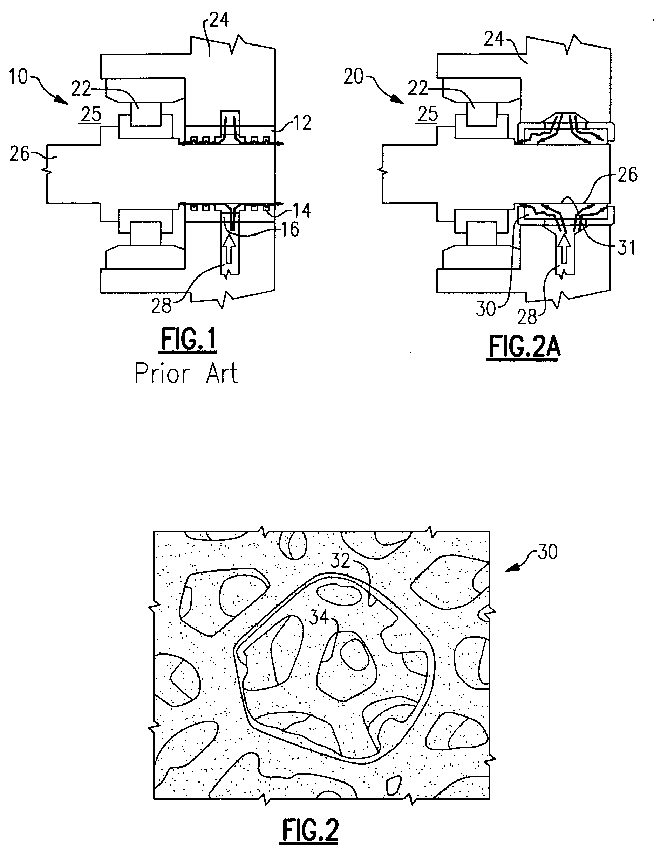

Figure 1 shows a prior art seal and gear box assembly 10. The gear box 22 is received within a housing 24, and drives a shaft 26. The gear box is shown somewhat schematically, however, it should be understood that the gear box may be associated with an engine shaft on a gas turbine engine such as may be found in an aircraft.

A seal 12 is provided with labyrinth members that form a torturous path 14 at an inner periphery that surrounds the shaft 26. A source of air 28 communicates to the path through a central opening 16 in the seal.

The use of the labyrinth seal provides good sealing to isolate lubricant 25 within the gear box. However, the labyrinth is subject to damage, and is relatively expensive.

Figure 2A shows a gear box and seal combination 20, wherein a gear box 22 drives a shaft 26 within a housing 24. Again, a source of air 28 is delivered to a seal body 30. As shown, however, there is not a central opening within the seal. Rather, the seal 30 is formed of a porous or open celled metal.

As shown in Figure 2B, the material of seal 30 has relatively large cells 32 with interconnected pores 34. In this manner, the air can pass through the seal.

The use of the porous or open celled metal provides several benefits. As an example, the material is less stiff than the material utilized to form a labyrinth seal. There is a natural resilience that allows a seal material to spring back if momentary shaft contact occurs without permanently deforming or damaging the seal. The porous metal seal can be operated with tight clearances and low air consumption.

In one embodiment, the open celled metal utilized to form the seal was a foam, and in particular an aluminum foam. One such aluminum foam is available under the trade name Duocel®, the trademark owned by Energy Research and Generation, Inc. These materials are disclosed at www.ergaerospace.com, the web page of ERG Materials and Aerospace Corporation.

Essentially, the disclosed foam is a porous structure or open-celled foam consisting of an interconnected network of solid struts. Three-dimensional bubbles form the foam and are packed into an array of similar sized bubbles. Each bubble has a large volume for a minimal surface area and surface energy. Given these common physical constraints, each bubble in the array is typically a 14-faceted polyhedra or solid shape called a tetrakaidecahedron. Once the foam is solidified, the thin membrane in each of the 14 facets or windows is removed by a reticulation process, creating an "open cell," and leaving only the thick outer perimeters of the window frames behind as a series of interconnected struts. The resulting bubble structure resembled a linked geodesic dome or "buckyball" structure where each link or strut is shared between three adjacent bubbles, thus creating the characteristic triangular cross-section. Unlike honeycomb, this open-celled structure is generally identical in all three directions, and is therefore considered an "isotropic" foam. Just as all the structural ligaments or struts are interconnected, the open cell porosity is also interconnected, enabling fluids to pass freely into and out of the foam structure. While technically designated as an open-celled foam, these materials are also occasionally called porous metals or metal sponge.

Each bubble structure in the open-celled foam generally consists of 14 reticulated windows or facets. The polygonal opening through each open window is referred to as pore 34. In any given bubble, the polygonal pores actually are shapes, but for material designation purposes, they are simplified to an average size and circular shape. The number of these pores that would subtend one inch then designates the foam "pore size." Duocel metal foams are generally manufactured from 5 to 40 pores per inch (1.97 to 15.75 p/cm). An average pore diameter is about 50% to 70% the diameter of its parent bubble, thus a 10 pore per inch (PPI) foam would have roughly 5 to 7 bubbles per inch (1.97 to 2.76 p/cm).

To form the foam, the base material to be foamed is simply resolved to a liquid state, foamed directly, and then reticulated. The resulting foam strut or ligament then consists of a solid beam of roughly triangular section that is made of the solid, homogeneous base material chosen. While there is porosity in the bubble structure due to the foaming process, there are no porosities or discontinuities within the individual ligaments.

While metal foams are disclosed, other open-celled materials, such as a plastic foam, e.g., high temperature fluorocarbon, or other high temperature polymers, may also be utilized.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A seal body for use to seal on a rotating shaft comprising:
a seal body (30) having a generally cylindrical central bore for receiving a shaft (26), said seal body being formed of an open-celled material.

2. The seal as set forth in claim 1, wherein said open-celled material is a metal foam.

3. The seal as set forth in claim 2, wherein said metal foam is an aluminum foam.

4. The seal as set forth in claim 2 or 3, wherein said metal foam includes a plurality of relatively large cells (32) interconnected by smaller pores (34).

5. The seal as set forth in claim 4, wherein said metal foam is formed by a plurality of bubbles that are typically 14-faceted shapes.

6. The seal as set forth in claim 4 or 5, wherein said pores are generally sized such that there are 50 to 40 pores per inch.

7. The seal as set forth in claim 6, wherein an average pore diameter of said plurality of pores (34) in said metal foam is between 50-70% of the diameter of the cell or bubble.

8. A shaft and seal combination (20) comprising:
a rotating shaft (26), said rotating shaft having a generally cylindrical outer periphery; and a seal body as claimed in any preceding claim,
said seal body surrounding said outer periphery of said shaft and mounted within a housing (24).

9. The combination as set forth in claim 8, wherein a pressurized air source (28) is delivered into said housing, and passes across said open-celled material to reach the outer periphery of said shaft.

10. A gear box (22) for use on an engine comprising:
a gear assembly for selectively driving a shaft (26), said gear assembly being received within a housing (24), said gear assembly being provided with a lubricant; and
the shaft extending outwardly of a bore in the housing, and a seal body as claimed in any of claims 1 to 7 for sealing said shaft within said housing.

11. The gear box as set forth in claim 10, wherein a pressurized air source (28) is delivered into said housing, and passes across said open-celled material to reach the outer periphery of said shaft.
